(19) Europäisches Patentamt
European Patent Office
Office européen des brevets

(11) **EP 4 651 232 A1**

(12) **EUROPEAN PATENT APPLICATION**

(43) Date of publication:
**19.11.2025 Bulletin 2025/47**

(21) Application number: **25168823.0**

(22) Date of filing: **07.04.2025**

(51) International Patent Classification (IPC):
*H01M 4/36* (2006.01)   *H01M 4/525* (2010.01)
*H01M 4/58* (2010.01)   *H01M 4/62* (2006.01)
*H01M 10/0525* (2010.01)   *H01M 4/02* (2006.01)

(52) Cooperative Patent Classification (CPC):
**H01M 4/364; H01M 4/366; H01M 4/525;
H01M 4/5825; H01M 4/625; H01M 10/0525;
H01M 2004/028**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **23.04.2024 KR 20240054007**

(71) Applicant: **SAMSUNG SDI CO., LTD.
Yongin-si, Gyeonggi-do 17084 (KR)**

(72) Inventors:
• **KIM, Young-Ki
17084 Yongin-si (KR)**
• **CHOI, Aram
17084 Yongin-si (KR)**
• **KIM, Sangmi
17084 Yongin-si (KR)**
• **DOO, Sungwook
17084 Yongin-si (KR)**
• **KANG, Gwiwoon
17084 Yongin-si (KR)**

(74) Representative: **Marks & Clerk LLP
15 Fetter Lane
London EC4A 1BW (GB)**

(54) **POSITIVE ELECTRODE ACTIVE MATERIAL FOR RECHARGEABLE LITHIUM BATTERY, PREPARATION METHOD OF THE SAME, AND RECHARGEABLE LITHIUM BATTERY INCLUDING THE SAME**

(57) A positive electrode active material for a rechargeable lithium battery, a preparation method of the positive electrode active material, and a rechargeable lithium battery including the positive electrode active material are disclosed. The positive electrode active material includes a first particle containing a compound represented by Formula 1 and having a first average particle diameter and a second particle containing a compound represented by Formula 2 and having a second average particle diameter smaller than the first average particle diameter, wherein an amount of the first particle is equal to or greater than an amount of the second particle. A more detailed description of Formulae 1 and 2 is provided in the present disclosure.

FIG. 6

**EP 4 651 232 A1**

# EP 4 651 232 A1

## Description

## BACKGROUND

### 1. Field

One or more embodiments of the present disclosure relate to a positive electrode active material for a rechargeable lithium battery, a preparation method of the positive electrode active material, and a rechargeable lithium battery including the positive electrode active material. For example, one or more embodiments of the present disclosure relate to a positive electrode active material containing an olivine-based lithium compound, a preparation method of the positive electrode active material, and a rechargeable lithium battery including the positive electrode active material.

### 2. Description of the Related Art

Recently, the rapid proliferation (spread) of battery-using electronic devices (such as mobile phones, laptop computers, and/or the like), and/or electric vehicles, has significantly increased the demand for rechargeable batteries with relatively high energy density and high capacity (e.g., electrical capacity). Accordingly, there has been active research and development aimed at enhancing or improving the performance of rechargeable batteries, such as rechargeable lithium batteries.

A rechargeable lithium battery includes a positive electrode and a negative electrode, both containing active materials capable of intercalation and deintercalation of lithium ions along with an electrolyte solution. Electrical energy is produced (generate) through oxidation and reduction reactions as the lithium ions are intercalated and deintercalated into/from the positive electrode and the negative electrode.

## SUMMARY

One or more aspects of embodiments of the present disclosure are directed toward a positive electrode active material having high capacity (e.g., electrical capacity), improved or enhanced low-temperature characteristics (e.g., electrical characteristics), long lifespan, and high energy density.

One or more aspects of embodiments of the present disclosure are directed toward a rechargeable lithium battery having high capacity (e.g., electrical capacity), improved or enhanced low-temperature characteristics (e.g., electrical characteristics), long lifespan, and high energy density.

Additional aspects will be set forth in part in the description which follows and, in part, will be apparent from the description or may be learned by practice of the presented embodiments of the disclosure.

In one or more embodiments of the present disclosure, a positive electrode active material includes a first particle containing a compound represented by Formula 1 and having a first average particle diameter and a second particle containing a compound represented by Formula 2 and having a second average particle diameter smaller than the first average particle diameter. An amount of the first particle is equal to or greater than an amount of the second particle.

$$\text{Formula 1} \qquad Li_{a1}Fe_{x1}B1_{y1}PO_{4-b1}$$

In Formula 1, $0.8 \leq a1 \leq 1.2$, $0.950 \leq x1 \leq 0.999$, $0.001 \leq y1 \leq 0.05$, $0 \leq b1 \leq 0.05$, and $x1 + y1 = 1$.

$$\text{Formula 2} \qquad Li_{a2}Fe_{x2}B2_{y2}PO_{4-b2}$$

In Formula 2, $0.8 \leq a2 \leq 1.2$, $0.950 \leq x2 \leq 0.999$, $0.001 \leq y2 \leq 0.05$, $0 \leq b2 \leq 0.05$, and $x2 + y2 = 1$.

Each of B1 in Formula 1 and B2 in Formula 2 is at least one element selected from the group consisting of titanium (Ti) and magnesium (Mg).

In one or more embodiments of the present disclosure, a preparation method of a positive electrode active material includes preparing a first particle having a first average particle diameter, preparing a second particle having a second average particle diameter smaller than the first average particle diameter, and mixing the first particle and the second particle. The preparing of the first particle includes mixing a first iron phosphate precursor, a first lithium source, a first carbon source, and a first dopant source to form a first mixture, drying the first mixture through spray drying, and calcining the dried (e.g., substantially dried) first mixture. The preparing of the second particle includes mixing a second iron phosphate precursor, a second lithium source, a second carbon source, and a second dopant source to form a second mixture, performing wet grinding on the second mixture, drying the second mixture, and calcining the dried (e.g., substantially dried) second mixture. The first particle and the second particle are mixed such that an amount of the first particle is equal to or greater than an amount of the second particle.

In one or more embodiments of the present disclosure, a rechargeable lithium battery includes the positive electrode active material according to one or more embodiments.

At least some of the above and other features of the invention are set out in the claims.

## BRIEF DESCRIPTION OF THE DRAWINGS

The accompanying drawings are included to provide a further understanding of embodiments of the subject matter of the present disclosure and are incorporated in and constitute a part of this specification. The drawings illustrate embodiments of the subject matter of the present disclosure and, together with the description, serve to explain principles of embodiments of the subject matter of the present disclosure. In the drawings:

FIG. 1 is a simplified conceptual diagram illustrating a rechargeable lithium battery according to one or more embodiments of the present disclosure;

FIGS. 2-5 are schematic views each illustrating a rechargeable lithium battery according to one or more embodiments, FIG. 2 illustrates a cylindrical battery, FIG. 3 illustrates a prismatic battery, and FIGS. 4 and 5 illustrate pouch-type (kind) batteries;

FIG. 6 is an enlarged view of a positive electrode active material layer of a rechargeable lithium battery according to one or more embodiments of the present disclosure;

FIG. 7 is a flowchart illustrating a preparation method of a positive electrode active material according to one or more embodiments of the present disclosure;

FIG. 8 is a graph illustrating pellet density values by press gap according to Examples 2 and 3-1 to 3-5;

FIG. 9A is scanning electron microscope (SEM) images of a positive electrode active material according to Example 1 of the present disclosure; and

FIG. 9B is SEM images of a positive electrode active material according to Example 2 of the present disclosure.

## DETAILED DESCRIPTION

In order to fully understand the aspects and features of the present disclosure, the subject matter of the present disclosure will be described in more detail with reference to the accompanying drawings. The subject matter of the present disclosure may, however, be embodied in one or more suitable forms and should not be construed as being limited to one or more embodiments set forth herein, and one or more suitable changes and modifications can be made. Rather, these embodiments are provided so that this disclosure will be thorough and complete and will fully convey the aspects and features of the present disclosure to those skilled in the art to which the present disclosure pertains.

As utilized herein, the singular forms "a," "an," and "the" are intended to include the plural forms as well, unless the context clearly indicates otherwise. Further, the utilization of "may" when describing embodiments of the present disclosure refers to "one or more embodiments of the present disclosure."

In the context of the present disclosure and unless otherwise defined, the terms "use," "using," and "used" may be considered synonymous with the terms "utilize," "utilizing," and "utilized," respectively.

As utilized herein, the term "about" or similar terms are used as terms of approximation and not as terms of degree and are intended to account for the inherent deviations in measured or calculated values that would be recognized by those of ordinary skill in the art. "About" or "approximately," as used herein, is also inclusive of the stated value and refers to within an acceptable range of deviation for the particular value as determined by one of ordinary skill in the art, considering the measurement in question and the error associated with measurement of the particular quantity (e.g., the limitations of the measurement system). For example, "about" may refer to within one or more standard deviations or within $\pm 30\%$, $\pm 20\%$, $\pm 10\%$, or $\pm 5\%$ of the stated value.

Any numerical range recited herein is intended to include all sub-ranges of substantially the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

In one or more embodiments, it will be understood that, if (e.g., when) an element is referred to as being "on" another element, the element may be directly on the other element or intervening elements may be present therebetween. In contrast, if (e.g., when) an element is referred to as being "directly on" another element, there are no intervening elements present.

In the drawings, the thicknesses of components (e.g., layers, films, panels, regions, and/or the like) are exaggerated to effectively illustrate the technical contents. Like reference numerals or symbols refer to like elements throughout, and duplicative descriptions thereof may not be provided throughout the specification.

The singular forms are intended to include the plural forms as well, unless the context clearly indicates otherwise. In addition, unless otherwise specially noted, the phrase "A or B" may indicate "A but not B", "B but not A", or "A and B". The terms "comprises/includes" and/or "comprising/including" used in this specification do not exclude the presence or addition of one or more other components.

In this specification, "combination thereof" may refer to a mixture, a stack, a composite, a copolymer, an alloy, a blend, a reaction product, and/or the like of the constituents.

Unless otherwise defined in this specification, a particle diameter may be an average particle diameter. Also, the particle diameter may refer to an average particle diameter (D50) which refers to a diameter of particles at a cumulative volume of about 50 vol% in a particle size distribution. The average particle diameter (D50) may be measured by a method generally used by or generally available to those skilled in the art, for example, may be measured by a particle size analyzer or may also be measured using a transmission electron microscope (TEM) image and/or a scanning electron microscope (SEM) image. In one or more embodiments, the average particle diameter may be measured by a measurement instrument using dynamic light-scattering (DLS), wherein the number of particles is counted for each particle size range by performing data analysis, and an average particle diameter (D50) value may then be obtained by calculation therefrom. Also, the average particle diameter may be measured using a laser diffraction method. If (e.g., when) measured by the laser diffraction method, for example, after dispersing particles to be measured in a dispersion medium, the dispersion medium is introduced into a commercial laser diffraction particle size measurement instrument (e.g., Microtrac MT 3000) and irradiated with ultrasonic waves of about 28 kHz at an output of about 60 W, and the average particle diameter (D50) based on about 50% of particle size distribution in the measurement instrument may then be calculated.

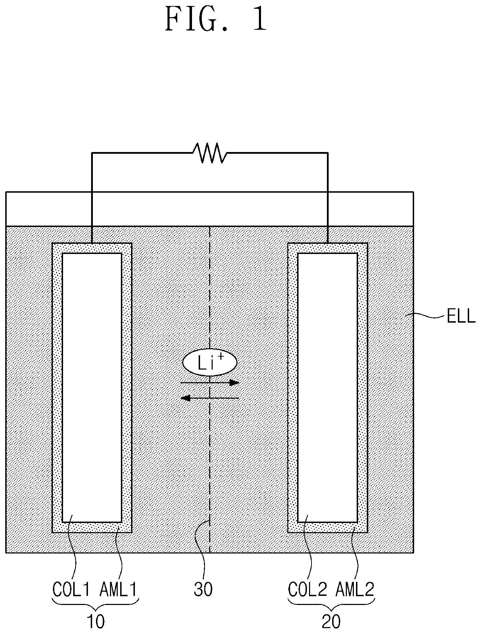

FIG. 1 is a simplified conceptual diagram illustrating a rechargeable lithium battery according to one or more embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced and/or apart (e.g., spaced apart or separated) from each other with the separator 30 therebetween. The separator 30 may be between the positive electrode 10 and the negative electrode 20. The positive electrode 10, the negative electrode 20, and the separator 30 may be in contact with the electrolyte solution ELL. The positive electrode 10, the negative electrode 20, and the separator 30 may be impregnated in/with the electrolyte solution ELL.

The electrolyte solution ELL may be a medium to transfer lithium ions between the positive electrode 10 and the negative electrode 20. In the electrolyte solution ELL, the lithium ions may move through the separator 30 toward the positive electrode 10 or the negative electrode 20.

**Positive Electrode 10**

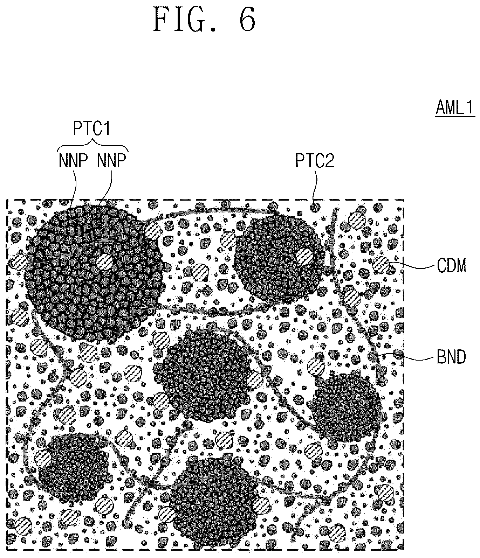

The positive electrode 10 for a rechargeable lithium battery may include a current collector COL1 and a positive electrode active material layer AML1 on the current collector COL1. The positive electrode active material layer AML1 may include a positive electrode active material and may further include a binder and/or a conductive (e.g., electrically conductive) material. The positive electrode active material layer AML1 according to one or more embodiments of the present disclosure will be described in more detail with reference to FIG. 6. Aluminium (Al) may be used for the current collector COL1, but embodiments of the present disclosure are not limited thereto.

**Negative Electrode 20**

The negative electrode 20 for a rechargeable lithium battery may include a current collector COL2 and a negative electrode active material layer AML2 on the current collector COL2. The negative electrode active material layer AML2 may include a negative electrode active material and may further include a binder and/or a conductive material (e.g., an electrically conductive material).

For example, the negative electrode active material layer AML2 may include about 90 wt% to about 99 wt% of the negative electrode active material, about 0.5 wt% to about 5 wt% of the binder, and about 0 wt% to about 5 wt% of the conductive (e.g., electrically conductive) material.

The binder may act or serve to attach or couple the negative electrode active material particles well to each other and also to attach or couple the negative electrode active material well to the current collector COL2. The binder may include a non-aqueous (e.g., water-insoluble) binder, an aqueous (e.g., water-soluble) binder, a dry binder, and/or a (e.g., any suitable) combination thereof.

The non-aqueous (e.g., water-insoluble) binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous (e.g., water-soluble) binder may be selected from among a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

If (e.g., when) an aqueous (e.g., water-soluble) binder is used as the negative electrode binder, a cellulose-based compound capable of imparting or increasing viscosity may be further included. The cellulose-based compound may include at least one selected from among carboxymethyl cellulose, hydroxypropyl methylcellulose, methyl cellulose, or an alkali metal salt thereof. The alkali metal may include sodium (Na), potassium (K), and/or lithium (Li).

The dry binder may be a polymer material that is capable of being fibrous (e.g., processable to be fibrous). For example, the dry binder may be polytetrafluoroethylene, polyvinylidene fluoride, a polyvinylidene fluoride-hexafluoropropylene copolymer, polyethylene oxide, and/or a (e.g., any suitable) combination thereof.

The conductive material (e.g., electron conductor) may be used to impart conductivity (e.g., electrical conductivity) to the electrode. Any suitable material that does not cause chemical change (e.g., does not cause an undesirable chemical change in the rechargeable lithium battery) and that conducts electrons may be used in the rechargeable lithium battery. Non-limiting examples thereof may include a carbon-based material, such as natural graphite, artificial graphite, carbon black, acetylene black, ketjen black, a carbon fiber, a carbon nanofiber, a carbon nanotube, and/or the like; a metal-based material including copper, nickel, aluminium, silver, and/or the like in a form of a metal powder and/or a metal fiber; a conductive (e.g., electrically conductive) polymer, such as polyphenylene and/or a polyphenylene derivative; and/or a (e.g., any suitable) mixture (e.g., combination) thereof.

The negative current collector COL2 may include a copper foil, a nickel foil, a stainless-steel foil, a titanium foil, a nickel foam, a copper foam, a polymer substrate coated with a conductive (e.g., electrically conductive) metal, and/or a (e.g., any suitable) combination thereof.

**Negative Electrode Active Material**

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include a carbon-based negative electrode active material, such as, for example, crystalline carbon, amorphous (e.g., non-crystalline) carbon and/or a (e.g., any suitable) combination thereof. The crystalline carbon may be graphite, such as non-shaped (e.g., amorphous), sheet-shaped (e.g., substantially sheet-shaped), flake-shaped (e.g., substantially flake-shaped), sphere-shaped (e.g., substantially sphere-shaped), and/or fiber-shaped (e.g., substantially fiber-shaped) natural graphite and/or artificial graphite. The amorphous (e.g., non-crystalline) carbon may be a soft carbon, a hard carbon, a mesophase pitch carbonization product, calcined coke, and/or the like.

The lithium metal alloy may include an alloy of lithium and a metal selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn).

The material capable of doping/dedoping lithium may be a Si-based negative electrode active material and/or a Sn-based negative electrode active material. The Si-based negative electrode active material may include silicon, a silicon-carbon composite, $SiO_x$ ($0 < x \leq 2$), a Si-Q alloy (where Q may be selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof). The Sn-based negative electrode active material may include Sn, $SnO_k$ ($0 < k \leq 2$) (e.g., $SnO_2$), a Sn-based alloy, and/or a (e.g., any suitable) combination thereof.

The silicon-carbon composite may be a composite of silicon and amorphous (e.g., non-crystalline) carbon. According to one or more embodiments, the silicon-carbon composite may be in a form of silicon particles and amorphous (e.g., non-crystalline) carbon coated on the surface of the silicon particles. For example, the silicon-carbon composite may include a secondary particle (core) in which primary silicon particles are assembled and an amorphous (e.g., non-crystalline) carbon coating layer (shell) on the surface of the secondary particle. The amorphous (e.g., non-crystalline) carbon may also be between the primary silicon particles, and for example, the primary silicon particles may be coated with the amorphous (e.g., non-crystalline) carbon. The secondary particle may exist dispersed in an amorphous (e.g., non-crystalline) carbon matrix.

The silicon-carbon composite may further include crystalline carbon. For example, the silicon-carbon composite may include a core including crystalline carbon and silicon particles and an amorphous (e.g., non-crystalline) carbon coating layer on a surface of the core.

The Si-based negative electrode active material and/or the Sn-based negative electrode active material may be used in combination with a carbon-based negative electrode active material.

**Separator 30**

Depending on the type (kind) of the rechargeable lithium battery, the separator 30 may be between the positive electrode 10 and the negative electrode 20. The separator 30 may include polyethylene, polypropylene, polyvinylidene fluoride, and/or a multilayer film of two or more layers thereof, and/or a mixed multilayer film, such as a polyethylene/-polypropylene two-layer separator, polyethylene/polypropylene/polyethylene three-layer separator, polypropylene/polyethylene/polypropylene three-layer separator, and/or the like.

The separator 30 may include a porous substrate and a coating layer including an organic material, an inorganic material, and/or a (e.g., any suitable) combination thereof on a surface (e.g., one surface or both surfaces (e.g., two opposite (opposite facing) surfaces) of the porous substrate.

The porous substrate may be a polymer film of any one selected from among polyolefin, such as polyethylene and polypropylene, polyester, such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, polytetrafluoroethylene (Teflon™), and/or a copolymer and/or (e.g., any suitable) mixture of two or more thereof.

The organic material may include a polyvinylidene fluoride-based polymer and/or a (meth)acrylic polymer.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and/or a (e.g., any suitable) combination thereof, but embodiments of the present disclosure are not limited thereto.

The organic material and the inorganic material may be mixed in one coating layer, and/or a coating layer including an organic material and/or a coating layer including an inorganic material may be stacked.

**Electrolyte Solution ELL**

The electrolyte solution ELL for a rechargeable lithium battery may include a non-aqueous (e.g., water-insoluble) organic solvent and a lithium salt.

The non-aqueous (e.g., water-insoluble) organic solvent may act or serve as a medium to transmit ions taking part in the electrochemical reaction of a rechargeable lithium battery.

The non-aqueous (e.g., water-insoluble) organic solvent may be a carbonate-based, an ester-based, an ether-based, a ketone-based, and/or an alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone and/or the like. The alcohol-based solvent may include ethanol, isopropyl alcohol, and/or the like, and the aprotic solvent may include nitriles, such as R-CN (wherein R may be a C2 to C20 linear, branched, or cyclic hydrocarbon group, a double bond, an aromatic ring, or an ether bond), and/or the like; amides, such as dimethylformamide; dioxolanes, such as 1,3-dioxolane, 1,4-dioxolane, and/or the like; sulfolanes, and/or the like.

The non-aqueous (e.g., water-insoluble) organic solvents may be used alone or in combination of two or more.

In one or more embodiments, if (e.g., when) using a carbonate-based solvent, a cyclic carbonate and a chain (e.g., non-cyclic) carbonate may be mixed and used, and the cyclic carbonate and the chain (e.g., non-cyclic) carbonate may be mixed in a volume ratio of about 1:1 to about 1:9.

The lithium salt dissolved in the organic solvent may supply lithium ions in a rechargeable lithium battery, enable a basic operation of a rechargeable lithium battery, and improve or enhance transportation of the lithium ions between the positive electrode and the negative electrode. Examples of the lithium salt may include at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y may be integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB).

**Rechargeable Lithium Battery**

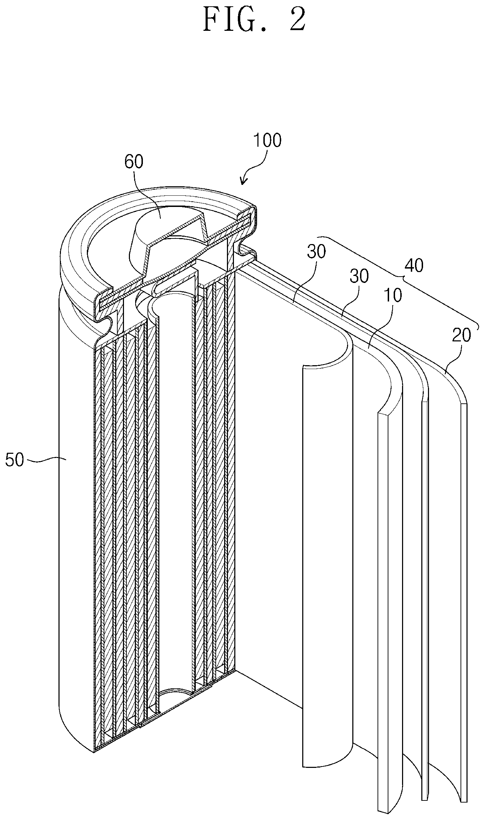

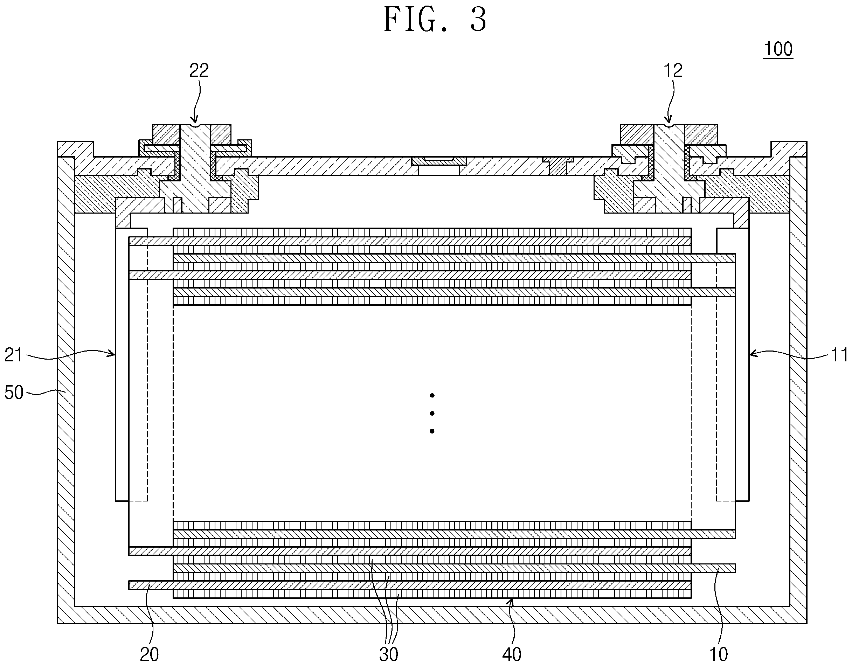

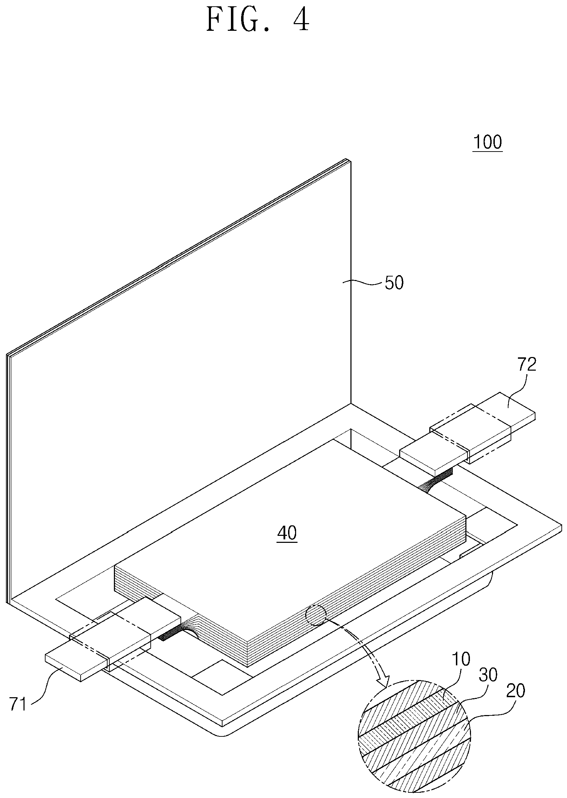

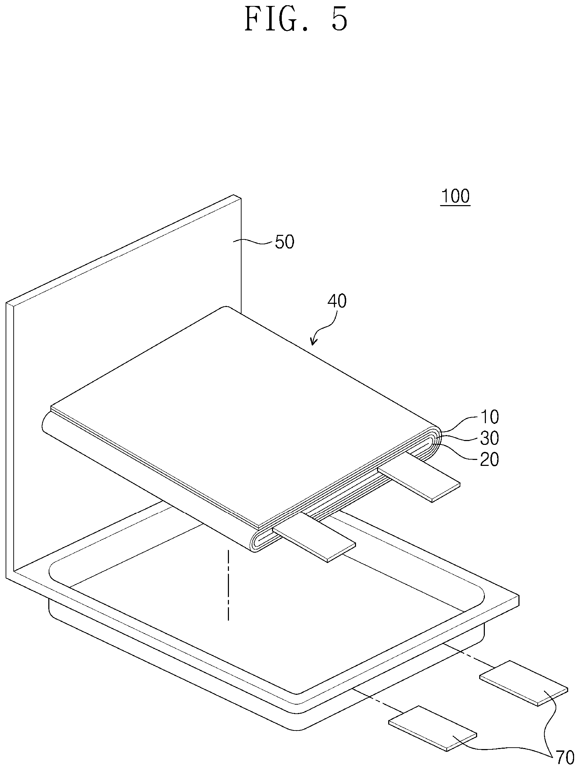

The rechargeable lithium battery may be classified into cylindrical, prismatic, pouch, coin-type (kind) batteries, and/or the like depending on their shape. FIGS. 2 to 5 are schematic views illustrating a rechargeable lithium battery according to one or more embodiments. FIG. 2 illustrates a cylindrical battery, FIG. 3 illustrates a prismatic battery, and FIGS. 4 and 5 illustrate pouch-type (kind) batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 that seals the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70, which may be, for example, a positive electrode tab 71 and a negative electrode tab 72 acting or serving as an electrical path to include the current formed in the electrode assembly 40 to the outside.

The rechargeable lithium battery according to one or more embodiments may be applied to automobiles, mobile phones, and/or one or more suitable types (kinds) of electric devices, as non-limiting examples.

FIG. 6 is an enlarged view of a positive electrode active material layer of a rechargeable lithium battery according to one or more embodiments of the present disclosure. Referring to FIG. 6, the positive electrode active material layer AML1 (see

FIG. 1) may include a first particle PTC1, a second particle PTC2, a conductive material CDM, and a binder BND. A plurality of first particles PTC1 and a plurality of second particles PTC2 constitute a positive electrode active material according to one or more embodiments of the present disclosure.

The positive electrode active material layer AML1 may further include an additive that may act or serve as a sacrificial positive electrode.

An amount of the positive electrode active material PTC1 and PTC2 in the positive electrode active material layer AML1 may be about 90 wt% to about 99.5 wt% based on 100 wt% of the positive electrode active material layer AML1. An amount of each of the binder BND and the conductive material CDM may be about 0.5 wt% to about 5 wt% based on 100 wt% of the positive electrode active material layer AML1.

The binder BND may bond or couple the first particle PTC1, the second particle PTC2, and the conductive material CDM to each other. For example, the binder BND may include at least one selected from the group consisting of polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but embodiments of the present disclosure are not limited thereto.

The conductive material CDM may be used to improve or enhance conductivity (e.g., electrical conductivity) of the positive electrode active material layer AML1. Any suitable conductive (e.g., electrically conductive) material that does not cause chemical changes (e.g., undesirable chemical changes) of the positive electrode active material layer AML1 may be used, without limitation, as the conductive material CDM. Examples of the conductive material CDM may include a carbon-based material, such as natural graphite, artificial graphite, carbon black, acetylene black, ketjen black, a carbon fiber, a carbon nanofiber, carbon nanotube, and/or the like; a metal-based material containing copper, nickel, aluminium, silver, and/or the like in a form of a metal powder and/or a metal fiber; a conductive (e.g., electrically conductive) polymer, such as polyphenylene and/or a polyphenylene derivative; and/or a (e.g., any suitable) mixture thereof.

Hereinafter, each of the first particle PTC1 and the second particle PTC2 will be described in more detail.

**First Particle PTC1**

The first particle PTC1 may have a polycrystal form and may include a secondary particle (e.g., may be in a secondary particle form) in which at least two first primary particles NNP are aggregated (e.g., agglomerated with each other). For example, one first particle PTC1 may include a plurality of first primary particles NNP that are aggregated (e.g., agglomerated) with each other. The first particle PTC1 may have a sphere (e.g., substantially sphere) or oval (e.g., substantially oval) shape.

In one or more embodiments, the first particle PTC1 may include a coating layer on a surface of the first particle PTC1. The coating layer may cover the entire (e.g., substantially entire) surface of the first particle PTC1 or may cover a portion of the surface of the first particle PTC1. For example, the coating layer may include carbon and/or a carbon-containing compound. The first particle PTC1 may have improved or enhanced structural stability and electrical conductivity due to the coating layer.

The coating layer may further include at least one selected from the group consisting of a titanium-containing compound and/or a magnesium-containing compound. A metal-containing compound, such as the titanium-containing compound and/or the magnesium-containing compound, may be, for example, a metal oxide, a metal hydroxide, a metal carbonate, and/or a composite and/or (e.g., any suitable) mixture thereof. The metal-containing compound may further include another metal and/or non-metal element. For example, the metal-containing compound may further include lithium.

In one or more embodiments, the first particle PTC1 may further include a grain boundary (interface) coating layer on surfaces of the first primary particles NNP. The grain boundary coating layer may be inside the first particle PTC1. The grain boundary coating layer may be along an interface between the first primary particles NNP inside the first particle PTC1. For example, the grain boundary coating layer may refer to a material applied to the grain boundary inside the first particle PTC1. The grain boundary coating layer may include carbon and/or a carbon-containing compound. The grain boundary coating layer may further include at least one selected from the group consisting of the titanium-containing compound and the magnesium-containing compound.

The inside of the first particle PTC1 may refer to an entire (e.g., substantially entire) inner region of the first particle PTC1 excluding the surface of the first particle PTC1. For example, the inside of the first particle PTC1 may refer to an entire (e.g., substantially entire) inner region (starting) from about 10 nm depth (below) from the outer surface of the first particle PTC1. For example, in one or more embodiments, this inner region starts from about 10 nm below the outer surface and can extend up to about 2 $\mu$m in depth.

Because the first particle PTC1 may further include a grain boundary coating part, structural stability may be strengthened or enhanced, and a coating layer may be formed uniformly (e.g., substantially uniformly) on the surface of the first particle PTC1. In one or more embodiments, because the first particle PTC1 may further include the grain boundary coating part, the electrical conductivity of the first particle PTC1 may be further improved or enhanced.

The first particle PTC1 may have an average particle diameter of about 2 $\mu$m to about 15 $\mu$m, about 3 $\mu$m to about 12 $\mu$m, or about 3 $\mu$m to about 10 $\mu$m. The average particle diameter of the first particle PTC1 is larger than the average particle diameter of the second particle PTC2 to be described in more detail later. In one or more embodiments, the average particle diameter may be measured with a particle size analyzer. The average particle diameter may refer to a diameter (D50) of particles at a cumulative volume of about 50 vol% in a particle size distribution.

The first primary particle NNP of the first particle PTC1 may have a size of about 10 nm to about 400 nm, about 20 nm to about 300 nm, or about 50 nm to about 200 nm. In one or more embodiments, the size of the first primary particle NNP may refer to a value obtained by measuring diameters of about 30 first primary particles NNP randomly selected from an electron micrograph of a positive electrode active material. The sizes of the first primary particles NNP may be substantially uniform.

In the present disclosure, if (e.g., when) particles are spherical (e.g., substantially spherical), "size" or "particle diameter" indicates a particle diameter or an average particle diameter, and if (e.g., when) the particles are non-spherical (e.g., substantially non-spherical), the "size" or "particle diameter" indicates a major axis length or an average major axis length. For example, if (e.g., when) particles are spherical (e.g., substantially spherical), "particle diameter" indicates a particle diameter, and if (e.g., when) the particles are non-spherical (e.g., substantially non-spherical), the "particle diameter" indicates a major axis length. The size or diameter of the particles may be measured utilizing a scanning electron microscope or a particle size analyzer. As the particle size analyzer, for example, HORIBA, LA-950 laser particle size analyzer, may be utilized. If (e.g., when) the size of the particles is measured utilizing a particle size analyzer, the average particle diameter (or size) is referred to as $D_{50}$. $D_{50}$ refers to the average diameter (or size) of particles whose cumulative volume corresponds to 50 vol% in the particle size distribution (e.g., cumulative distribution) and refers to the value of the particle size corresponding to 50% from the smallest particle when the total number of particles is 100% in the distribution curve accumulated in the order of the smallest particle size to the largest particle size.

The first particle PTC1 may have a maximum particle diameter ($D_{max}$) of about 10 $\mu$m to about 30 $\mu$m.

The first particle PTC1 may include an olivine-based lithium compound represented by Formula 1.

$$\text{Formula 1} \qquad Li_{a1}Fe_{x1}B1_{y1}PO_{4-b1}$$

In Formula 1, $0.8 \leq a1 \leq 1.2$, $0.950 \leq x1 \leq 0.999$, $0.001 \leq y1 \leq 0.05$, $0 \leq b1 \leq 0.05$, and $x1 + y1 = 1$ are satisfied, and in Formula 1, B1 is at least one element selected from the group consisting of Ti and Mg. B1 may be a dopant doped into the first particle PTC1. For example, B1 may contain Ti and Mg.

In the first particle PTC1, B1 may be Ti and Mg. If (e.g., when) the first particle PTC1 is doped with Ti, this may have the effect of controlling growth of the first primary particles NNP of the first particle PTC1, and as a result, the sizes of the first primary particles NNP of the first particle PTC1 may be made substantially more uniform and smaller. In the first particle PTC1, an atomic fraction of Ti may be greater than an atomic fraction of Mg. The first particle PTC1 may satisfy Expression 1.

Expression 1

$$3.0 < \frac{2 \times (\text{oxidation number of Mg}) + 4 \times (\text{oxidation number of Ti})}{(\text{oxidation number of Mg}) + (\text{oxidation number of Ti})} < 3.5$$

The first particle PTC1 may further include carbon derived from the coating layer and/or grain boundary coating layer according to one or more embodiments. An amount of carbon element in the first particle PTC1 may be about 0.5 wt% to about 10 wt%, about 1 wt% to about 3 wt%, or about 1.5 wt% to about 2.5 wt%.

The first particle PTC1 may have a sphere (e.g., substantially sphere) shape in which the nano-sized first primary particles NNP are aggregated (e.g., agglomerated). With the first primary particles NNP being closely (e.g., substantially closely) aggregated (e.g., agglomerated) with each other, the first particle PTC1 may have the following characteristics and features. The first particle PTC1 may have a sphere (e.g., substantially sphere) or oval (e.g., substantially oval) shape. The average particle diameter ($D_{50}$) of the first particle PTC1 may be about 2 $\mu$m to about 15 $\mu$m. The first particle PTC1 may have a porosity of about 20% to about 40%. Porosity·(n) may·be defined as the pore volume (Vp) divided by·the total

$$n = \frac{V_p}{V_t}$$

volume·(Vt) of a particle                . For example, porosity can be measured using Mercury Intrusion Porosimetry (MIP), Gas Adsorption (BET Method), or Helium Pycnometry. The span value ( $\frac{D_{90} - D_{10}}{D_{50}}$ ), obtained by analysis on the first particle PTC1 using a particle size analyzer, may be about 0.3 to about 0.75.

If (e.g., when) the first particle PTC1 has a sphere (e.g., substantially sphere) shape in which the nano-sized first primary particles NNP are aggregated (e.g., agglomerated), an amount of a binder BND necessary to bind or couple the first particle PTC1 to the current collector COL1 (see FIG. 1) may be relatively small. For example, the amount of the binder BND necessary to bind or couple the first particle PTC1 to the current collector COL1 (see FIG. 1) may be smaller than the amount of the binder BND necessary to bind or couple the second particle PTC2 to the current collector COL1 (see FIG. 1). This may result from an increase in or enhancement of binding force of the first particle PTC1 to the current collector COL1 (see FIG. 1) due to the first average particle diameter being larger than the second average particle diameter. For example, the amount of the binder BND may be about 0.5 wt% to about 2 wt% based on 100 wt% of the positive electrode active material layer AML1.

**Second Particle PTC2**

The second particle PTC2 may have (e.g., may be in) a single particle form. In one or more embodiments, the single particle may refer to one particle that exists alone without a grain boundary therein. With respect to morphology, the single particle may refer to one particle, a monolith structure, a single unitary structure, and/or a non-aggregated (e.g., non-agglomerated) particle, existing as an independent phase in which particles do not aggregate (e.g., agglomerate) with each other. For example, the single particle may be a single crystal. Alternatively, the single particle may be a particle containing a few crystals. The single particle may be independently separated. Alternatively, the single particle may be in a form of having about 2 to about 100 single particles attached (e.g., bonded or coupled) to each other.

The second particle PTC2 may be a nano-shaped (e.g., nano-sized) positive electrode active material. The second particle PTC2 may include (e.g., or even be) at least one second primary particle. In one or more embodiments, the second primary particles may also be attached with each other to have a particle shape. The second particle PTC2 may not have substantially the same sphere (e.g., substantially sphere) shape as the first particle PTC1 even though the second primary particles are attached with each other. For example, the second particle PTC2 may have a random (e.g., amorphous) shape.

The second particle PTC2 may be provided in one or more suitable sizes. For example, the second particle PTC2 may have an average particle diameter of about 0.1 $\mu$m to about 2 $\mu$m or of about 1 $\mu$m. The second particle PTC2 may have a minimum particle diameter, which is the size of the second primary particle, of about 100 nm to about 500 nm or about 200 nm to about 300 nm.

In one or more embodiments, the minimum particle diameter, which is the size of the second primary particle, may refer to a value obtained by measuring the diameters of about 30 second primary particles randomly selected from an electron micrograph of the second particle PTC2. In one or more embodiments, the size of the second primary particle may be larger than the size of the first primary particle NNP.

The second particle PTC2 may have a porosity smaller than about 30%. The span value, obtained by analysis on the second particle PTC2 using a particle size analyzer, may be outside the range of about 0.3 to about 0.75.

In one or more embodiments, the second particle PTC2 may include a coating layer on a surface of the second particle PTC2. The coating layer may cover the entire (e.g., substantially entire) surface of the second particle PTC2 or may cover a portion of the surface of the second particle PTC2. For example, the coating layer may include carbon and/or a carbon-containing compound. The coating layer may further include at least one selected from the group consisting of a titanium-containing compound and a magnesium-containing compound. A metal-containing compound, such as the titanium-containing compound and/or the magnesium-containing compound may be, for example, a metal oxide, a metal hydroxide, a metal carbonate, and/or a composite and/or (e.g., any suitable) mixture thereof. The metal-containing compound may further include another metal and/or non-metal element. For example, the metal-containing compound may further include lithium. The second particle PTC2 may have improved or enhanced structural stability and electrical conductivity due to the coating layer.

The second particle PTC2 may include an olivine-based lithium compound represented by Formula 2.

$$\text{Formula 2} \qquad Li_{a2}Fe_{x2}B2_{y2}PO_{4-b2}$$

In Formula 2, $0.8 \leq a2 \leq 1.2$, $0.950 \leq x2 \leq 0.999$, $0.001 \leq y2 \leq 0.05$, $0 \leq b2 \leq 0.05$, and $x2 + y2 = 1$, and in Formula 2, B2 is at least one element selected from the group consisting of Ti and Mg.

The second particle PTC2 may further include carbon derived from the coating layer as described in one or more embodiments. An amount of carbon element in the second particle PTC2 may be about 0.5 wt% to about 5 wt%, about 0.5 wt% to about 3 wt%, or about 0.5 wt% to about 2 wt%. The amount of carbon in the second particle PTC2 may be smaller than the amount of carbon in the first particle PTC1. This may be because it is more difficult for the coating layer to be formed smoothly (e.g., substantially smoothly) on the second particle PTC2, which may be a single particle, than on the first particle PTC1 which may be a secondary particle.

If (e.g., when) the second particle PTC2 is a single particle, the amount of the binder BND necessary to bind or couple the second particle PTC2 to the current collector COL1 (see FIG. 1) may be relatively large. For example, the amount of the binder BND necessary to bind or couple the second particle PTC2 to the current collector COL1 (see FIG. 1) may be greater than the amount of the binder BND necessary to bind or couple the first particle PTC1 to the current collector COL1 (see FIG. 1). This may result from the second average particle diameter being smaller than the first average particle diameter. For example, the amount of the binder BND may be about 2 wt% to about 5 wt% based on 100 wt% of the positive electrode active material layer AML1.

Referring to FIG. 6, the positive electrode active material according to one or more embodiments of the present disclosure will be described in more detail. The positive electrode active material according to one or more embodiments of the present disclosure includes the first particle PTC1 and the second particle PTC2. The mixing weight ratio of the first particle PTC1 to the second particle PTC2 in the positive electrode active material may be about 50:50 to about 99:1, about 50:50 to about 90:10, or about 50:50 to about 70:30. An amount of the first particle PTC1 is equal to or greater than an amount of the second particle PTC2 in the positive electrode active material.

The positive electrode active material according to one or more embodiments may have the first particle PTC1 that is a secondary particle and the second particle PTC2 that is a single particle mixed therein, and may thus have improved or enhanced pellet density, capacity (e.g., electrical capacity), and energy density. In one or more embodiments, the pellet density of the positive electrode active material according to one or more embodiments may be about 2.0 g/cc to about 3.0 g/cc. A rechargeable lithium battery including the positive electrode active material according to one or more embodiments may have improved or enhanced low-temperature characteristics (e.g., electrical characteristics).

Because the second particle PTC2, which may be a single particle (e.g., in a single particle form), has a small average particle diameter, a large amount of the binder BND may be desired or required to bind or couple the second particle PTC2 to the current collector COL1 (see FIG. 1). Because the positive electrode active material according to one or more embodiments further includes the first particle PTC1, having a large average particle diameter, as well as the second particle PTC2, the positive electrode active material layer AML1 (see FIG. 1) may be relatively easily bound or coupled to the current collector COL1. For example, through the first particle PTC1, the amount of the binder BND in the positive electrode active material layer AML1 may be reduced.

In one or more embodiments, a positive electrode active material slurry including the positive electrode active material according to one or more embodiments may be prepared. The positive electrode active material slurry may include solids and/or a solvent (for example, N-methylpyrrolidone). The solids may include the first particle PTC1, the second particle PTC2, the conductive material CDM, and the binder BND. By further including the first particle PTC1 that may be a secondary particle, the positive electrode active material slurry may have a decreased viscosity, compared with a slurry only including the second particle PTC2.

In one or more embodiments, the positive electrode active material slurry according to one or more embodiments may have a viscosity of about 7000 mPa·s or less. For example, the viscosity of the positive electrode active material slurry may be about 1000 mPa·s to about 7000 mPa·s, about 2000 mPa·s to about 6000 mPa·s, or about 3000 mPa·s to about 4000 mPa·s. By having the viscosity falling within the foregoing ranges, the positive electrode active material slurry may be applied smoothly (e.g., substantially smoothly) onto the current collector COL1 (see FIG. 1). The viscosity can be measured at 25 °C using, for example, a Brookfield DV2T Viscometer (AMETEK Brookfield), Brookfield DVNext Rheometer (AMETEK Brookfield), Anton Paar MCR Series Rheometers (e.g., MCR 102, MCR 302), TA Instruments Discovery HR Series Rheometers (e.g., HR-10, HR-20), or Malvern Kinexus Rheometer (e.g., Kinexus Ultra+, Kinexus Pro+).

Because the positive electrode active material slurry according to one or more embodiments includes the first particle PTC1 as described in one or more embodiments, the viscosity of the slurry may increase, thereby providing the viscosity of the slurry as described in one or more embodiments even with a small amount of solvent. For example, because the positive electrode active material slurry according to one or more embodiments includes the first particle PTC1, the total solid content (e.g., amount) in the slurry may increase, and at the same time, the slurry may be applied smoothly (e.g., substantially smoothly) onto the current collector.

The increase in total solid content (e.g., amount) of the positive electrode active material slurry may increase or enhance the binding force between the positive electrode active material layer AML1 (see FIG. 1) and the current collector COL1 (see FIG. 1). This may be because the interaction between the positive electrode active material and the current collector COL1 (see FIG. 1) also increases substantially proportionally as the amount of the applied positive electrode active material increases. In one or more embodiments, compared with a slurry only including the second particle PTC2, the positive electrode active material slurry according to one or more embodiments may be applied smoothly (e.g., substantially smoothly) onto the current collector, and at the same time, may also increase or enhance binding force between the positive electrode active material layer and the current collector.

The positive electrode active material according to one or more embodiments may have a bimodal form including a secondary particle (for example, PTC1) and a single particle (for example, PTC2) having different average particle diameters. Because the single particle fills a void between the secondary particles, the integration density of the positive electrode active material layer AML1 (see FIG. 1) may be improved or enhanced. For example, the positive electrode active material layer AML1 according to one or more embodiments may have relatively high energy density per unit volume.

The rechargeable lithium battery including the positive electrode active material according to one or more embodiments may have improved or enhanced low-temperature characteristics (e.g., electrical characteristics). In one or more embodiments, a capacity of the rechargeable lithium battery at about -20 °C compared with an initial discharge amount thereof at about 25 °C (capacity at about -20 °C/initial discharge amount at about 25 °C) may be about 40% or greater. For example, the capacity at about -20 °C of the rechargeable lithium battery according to one or more embodiments, compared with the initial discharge amount thereof at about 25 °C (capacity at about -20 °C/initial discharge amount at about 25 °C), may be about 40% to about 100%, about 40% to about 70%, or about 40% to about 60%.

**Preparation Method of Positive Electrode Active Material**

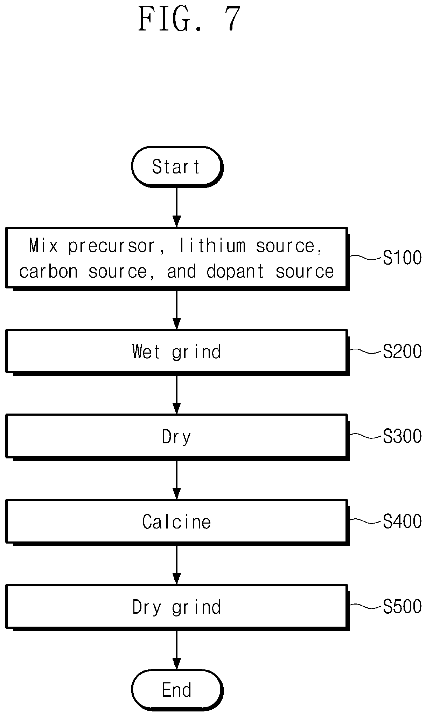

FIG. 7 is a flowchart illustrating a preparation method of a positive electrode active material according to one or more embodiments of the present disclosure. Referring to FIG. 7, a preparation method of a first particle PTC1 according to one or more embodiments will be described in more detail.

An iron phosphate precursor, a lithium source, a carbon source, and/or a dopant source may be added to a solvent and mixed (S100). For example, the solvent may be water, ethanol, and/or the like. The iron phosphate precursor may be a compound containing both (e.g., simultaneously) iron (Fe) and phosphorus (P), and/or a (e.g., any suitable) mixture of an iron (Fe)-containing compound and a phosphorus (P)-containing compound. For example, the iron phosphate precursor may include $FePO_4 \cdot H_2O$ and/or a (e.g., any suitable) mixture of $FeSO_4$ and $H_3PO_4$.

The lithium source may include at least one selected from the group consisting of lithium oxide, lithium hydroxide, lithium chloride, lithium nitrate, lithium nitrite, lithium formate, lithium acetate, lithium oxalate, lithium carbonate, lithium phosphate, lithium hydrogen phosphate, lithium dihydrogen phosphate, and lithium citrate.

The carbon source may include at least one selected from the group consisting of glucose, sucrose, fructose, cellulose, starch, citric acid, polyacrylic acid, polyethylene glycol, and dopamine.

The dopant source may include a dopant metal-containing oxide and/or a dopant metal-containing chloride. For example, the dopant source may include at least one selected from the group consisting of titanium oxide and magnesium oxide.

Wet grinding may be performed on the mixture (S200). For the wet grinding, a generally used or generally available wet mill capable of temperature control may be used. For example, at least one selected from among a beads mill, a ball mill, an attrition mill, an apex mill, a super mill, and a basket mill may be used for the wet grinding. Through the wet grinding process, particles in the mixture may be ground to a substantially fine size.

According to one or more embodiments of the present disclosure, the wet grinding (S200) may also not be provided. For example, in order to maximize or increase the average particle diameter of the first particle PTC1 to be finally prepared, the wet grinding (S200) of the precursor particles may also not be provided.

The solvent may be removed (e.g., evaporated) from the mixture to form a dried (e.g., substantially dried) mixture. According to one or more embodiments of the present disclosure, the forming of the dried (e.g., substantially dried) mixture may include performing spray drying on the mixture (S300). A generally used spray-drying device may be used for the spray drying. For example, the spray drying may be performed by using at least one selected from among an ultrasonic spray-drying device, an air nozzle spray-drying device, an ultrasonic nozzle spray-drying device, a filter expansion droplet-generating device, and an electrostatic spray-drying device.

The particles, that are finely (e.g., substantially finely) reduced to a size of a first primary particle after the wet grinding process, may be aggregated (e.g., agglomerated) with each other through the spray drying process to thereby form a secondary particle. Therefore, by adjusting the flow rate and velocity of carrier gas, temperature, the residence time in a reactor, internal pressure, and/or the like during the spray drying process, the first particle PTC1 may be formed into the secondary particle of a desired or suitable size.

In one or more embodiments, the mixture to be spray-dried may have a total solid content (e.g., amount) (TSC) of about 20% to about 40%. The total solid content (e.g., amount) may refer to a converted value to a percentage of the weight of a solid material remaining after solvent evaporation (e.g., dried (e.g., substantially dried) mixture) based on the total weight of the mixture (e.g., spray liquid). For example, the spray liquid may have a total solid content (e.g., amount) of about 30 wt%.

If (e.g., when) the total solid content (e.g., amount) is less than about 20%, an average particle diameter of the first particle PTC1 may decrease, and productivity may be reduced. If (e.g., when) the total solid content (e.g., amount) is greater than about 40%, adjusting the average particle diameter of the first particle PTC1 may become difficult, and size difference between the first particles PTC1 may increase.

The spray liquid according to one or more embodiments may have a viscosity of about 1500 mPa·s to about 2500 mPa·s having the foregoing total solid content (e.g., amount). For example, the spray liquid may have a viscosity of about 2000 mPa·s.

In one or more embodiments, the spray drying may be performed at a temperature of about 100 °C to about 300 °C. Spray gas (e.g., air), used for the spray drying, may be injected at a first temperature and discharged at a second temperature. For example, the first temperature may be about 200 °C to about 250 °C. The second temperature may be about 80 °C to about 150 °C.

The spray liquid for the spray drying may have a flow rate of about 30 mL/min to about 80 mL/min. If (e.g., when) the flow rate is less than about 30 mL/min, the nozzle may be clogged, and productivity may be reduced. If (e.g., when) the flow rate is greater than about 80 mL/min, due to moisture condensation in the spray-drying device, the mixture may not be dried completely.

The spray liquid may have an input pressure of about 0.3 MPa to about 0.7 MPa. For example, the input pressure of the spray liquid may be about 0.5 MPa.

The dried (e.g., substantially dried) mixture may be calcined in an inert atmosphere (S400). The inert atmosphere may be a nitrogen atmosphere and/or an argon atmosphere. The temperature at which the calcination process is performed may be about 500 °C to about 1000 °C or about 600 °C to about 800 °C. The execution time of the calcination process may be about 4 hours to about 20 hours or about 6 hours to about 12 hours. As the dried (e.g., substantially dried) mixture is calcined, the first particle PTC1 containing the compound represented by Formula 1 as described in one or more embodiments may be formed.

Dry grinding may be performed on the calcined first particle PTC1 (S500). The calcined mixture may be ground using an air jet mill and/or the like. The dry grinding may be performed at a rotation speed of about 0 rpm to about 7000 rpm. If (e.g., when) the dry grinding is performed at the rotation speed within the foregoing range, the first particle PTC1 may have a form of a secondary particle. The dry grinding of the first particle PTC1 may also not be provided.

In the preparation of the first particle PTC1 according to one or more embodiments, the carbon source may be introduced to the iron phosphate precursor to form a carbon coating layer uniformly (e.g., substantially uniformly) on surfaces of first primary particles. Thereafter, the first primary particles may be closely (e.g., substantially closely) aggregated (e.g., agglomerated) through the spray drying to form a dense sphere-shaped (e.g., substantially sphere-shaped) secondary particle. As a result, the first particle PTC1 may include the stable carbon coating layer in the outside and inside of the first particle PTC1 and may thus have a relatively high carbon content (e.g., amount). Due to the high carbon content (e.g., amount) of the first particle PTC1, a positive electrode active material layer AML1 may have improved or enhanced conductivity (e.g., electrical conductivity).

The preparation of a second particle PTC2 according to one or more embodiments will be described in more detail.

An iron phosphate precursor, a lithium source, a carbon source, and/or a dopant source may be added to a solvent and mixed. For example, the solvent may be water, ethanol, and/or the like. The iron phosphate precursor may be a compound containing both (e.g., simultaneously) iron (Fe) and phosphorus (P), and/or a (e.g., any suitable) mixture of an iron (Fe)-containing compound and a phosphorus (P)-containing compound. For example, the iron phosphate precursor may include $FePO_4·H_2O$ and/or a (e.g., any suitable) mixture of $FeSO_4$ and $H_3PO_4$.

The lithium source, the carbon source, and the dopant source may be substantially the same or similar as/to those in the preparation of the first particle PTC1 as described in one or more embodiments.

Wet grinding may be performed on the mixture. The wet grinding process may be substantially the same or similar as/to that in the preparation of the first particle PTC1 as described in one or more embodiments.

The solvent may be removed (e.g., evaporated) from the mixture to form a dried (e.g., substantially dried) mixture. The forming of the dried (e.g., substantially dried) mixture may include performing direct evaporation on the mixture. For example, the direct evaporation may include static drying and/or spray drying. To form the second particle PTC2 into a single particle, the static drying may be used.

The dried (e.g., substantially dried) mixture may be calcined in an inert atmosphere. The conditions of the calcination process may be substantially the same or similar as/to those in the preparation of the first particle PTC1 as described in one or more embodiments. As the dried (e.g., substantially dried) mixture is calcined, the second particle PTC2 containing the compound represented by Formula 2 as described in one or more embodiments may be formed.

Dry grinding may be performed on the calcined second particle PTC2. The dry grinding may be performed at a rotation speed of about 7000 rpm to about 10000 rpm. If (e.g., when) the dry grinding is performed at the rotation speed within the foregoing range, the second particle PTC2 may have a form of a single particle. In one or more embodiments, for the first particle PTC1 as described in one or more embodiments, the dry grinding may not be provided.

The prepared first particle PTC1 and second particle PTC2 may be mixed in an appropriate or suitable ratio to thereby form the positive electrode active material according to one or more embodiments.

Analysis on a carbon element according to one or more embodiments may be performed using an Elementar Micro Cube elemental analyzer. The set or specific operation method and conditions are as follows. A sample of 1 to 2 mg was weighed in a tin cup, placed in an automatic sampling tray and introduced into a combustion tube through a ball valve, and the combustion was carried out at a combustion temperature of about 1000 °C. Subsequently, reduction of the combustion gas using reduced copper was carried out to form carbon dioxide. Carbon dioxide was detected using a thermal conductivity detector (TCD).

Scanning electron microscope-energy dispersive X-ray spectroscopy (SEM-EDS) and quantitative analyses on a particle surface may be conducted to measure the carbon content (e.g., amount) according to one or more embodiments. In addition to SEM-EDS, inductively coupled plasma-mass spectrometry (ICP-MS), inductively coupled plasma optical emission spectroscopy (ICP-OES), and/or the like may be used to measure the carbon content (e.g., amount).

Hereinafter, Examples and Comparative Examples of the present disclosure are described in more detail. However, the following examples are provided for illustrative purpose only and are not to be construed to limit the scope of the present disclosure.

**Example 1: Preparation of First Particle in The Form of Secondary Particle**

An iron phosphate precursor ($FePO_4$), lithium carbonate, and titanium dioxide were mixed in a molar ratio of Fe:Li:Ti=about 1:1.03:0.004. 10 wt% of glucose was further added to the mixture. The slurry mixture was dried (e.g., substantially dried) over evaporation, through spray drying, under conditions of a spray pressure of about 0.5 MPa and a temperature of about 230 °C. The dried (e.g., substantially dried) mixture was calcined in a nitrogen atmosphere at about 750 °C and for about 10 hours to obtain a first particle in the form of a secondary particle. The average particle diameter of the first particle was about 3 $\mu$m to about 10 $\mu$m. The size of a first primary particle of the first particle was about 50 nm to about 200 nm.

**Example 2: Preparation of Second Particle in The Form of Single Particle**

An iron phosphate precursor ($FePO_4$), lithium carbonate, and titanium dioxide were mixed in a molar ratio of Fe:Li:Ti=about 1:1.03:0.004. 10 wt% of glucose was further added to the mixture. Wet grinding was performed on the mixture by ball milling. The mixture was dried (e.g., substantially dried) over evaporation on a tray by heating, then dried (e.g., substantially dried) in a vacuum oven at about 85 °C for about 4 hours. The dried (e.g., substantially dried) mixture was calcined in a nitrogen atmosphere at about 650 °C for about 10 hours. The calcined product was ground at a rotation speed of about 8000 rpm to obtain a second particle in the form of a single particle. The average particle diameter of the second particle was about 0.1 $\mu$m (100 nm) to about 2 $\mu$m. The size of a second primary particle of the second particle was about 200 nm to about 300 nm.

In other words, Example 1 describes the preparation of larger secondary particles, while Example 2 details the preparation of smaller single particles.

In Example 1, an iron phosphate precursor ($FePO_4$), lithium carbonate, and titanium dioxide were mixed in a molar ratio of Fe:Li:Ti=about 1:1.03:0.004, with 10 wt% glucose added. The slurry was spray dried at about 0.5 MPa and 230 °C, then calcined in a nitrogen atmosphere at about 750 °C for 10 hours to produce secondary particles with an average diameter of 3 $\mu$m to 10 $\mu$m and primary particles sized 50 nm to 200 nm.

In Example 2, the same precursor mixture was wet ground by ball milling, dried by heating and in a vacuum oven at about 85 °C for 4 hours, then calcined at about 650 °C for 10 hours. The calcined product was ground at about 8000 rpm to yield single particles with an average diameter of 0.1 $\mu$m (100 nm) to 2 $\mu$m and primary particles sized 200 nm to 300 nm.

**Example 3-1: Mixture Preparation of First Particle and Second Particle**

The first particle according to Example 1 and the second particle according to Example 2 were mixed in a mass ratio of about 90:10 to prepare a positive electrode active material.

**Example 3-2: Mixture Preparation of First Particle and Second Particle**

The first particle according to Example 1 and the second particle according to Example 2 were mixed in a mass ratio of about 80:20 to prepare a positive electrode active material.

**Example 3-3: Mixture Preparation of First Particle and Second Particle**

The first particle according to Example 1 and the second particle according to Example 2 were mixed in a mass ratio of about 70:30 to prepare a positive electrode active material.

**Example 3-4: Mixture Preparation of First Particle and Second Particle**

The first particle according to Example 1 and the second particle according to Example 2 were mixed in a mass ratio of about 60:40 to prepare a positive electrode active material.

**Example 3-5: Mixture Preparation of First Particle and Second Particle**

The first particle according to Example 1 and the second particle according to Example 2 were mixed in a mass ratio of about 50:50 to prepare a positive electrode active material.

**Preparation of Positive Electrode**

In Example 1, 97 wt% of a final positive electrode active material, 1.5 wt% of a polyvinylidene fluoride binder, and 1.5 wt% of a carbon black conductive material were mixed in an N-methylpyrrolidone solvent to prepare a positive electrode active material slurry. The positive electrode active material slurry was applied to an aluminium current collector and dried (e.g., substantially dried), and then rolling was performed to prepare a positive electrode.

In Example 2, a positive electrode was prepared in substantially the same manner as that of Example 1, except that a positive electrode active material slurry was prepared by mixing 94 wt% of a final positive electrode active material, 3 wt% of a polyvinylidene fluoride binder, and 3 wt% of a carbon black conductive material in an N-methylpyrrolidone solvent.

In Example 3-1, a positive electrode was prepared in substantially the same manner as that of Example 1, except that a positive electrode active material slurry was prepared by mixing 96.8 wt% of a final positive electrode active material, 1.6 wt% of a polyvinylidene fluoride binder, and 1.6 wt% of a carbon black conductive material in an N-methylpyrrolidone solvent.

In Example 3-2, a positive electrode was prepared in substantially the same manner as that of Example 1, except that a positive electrode active material slurry was prepared by mixing 96.6 wt% of a final positive electrode active material, 1.7 wt% of a polyvinylidene fluoride binder, and 1.7 wt% of a carbon black conductive material in an N-methylpyrrolidone solvent.

In Example 3-3, a positive electrode was prepared in substantially the same manner as that of Example 1, except that a positive electrode active material slurry was prepared by mixing 96.4 wt% of a final positive electrode active material, 1.8 wt% of a polyvinylidene fluoride binder, and 1.8 wt% of a carbon black conductive material in an N-methylpyrrolidone solvent.

In Example 3-4, a positive electrode was prepared in substantially the same manner as that of Example 1, except that a positive electrode active material slurry was prepared by mixing 96.2 wt% of a final positive electrode active material, 1.9 wt% of a polyvinylidene fluoride binder, and 1.9 wt% of a carbon black conductive material in an N-methylpyrrolidone solvent.

In Example 3-5, a positive electrode was prepared in substantially the same manner as that of Example 1, except that a positive electrode active material slurry was prepared by mixing 96 wt% of a final positive electrode active material, 2 wt% of a polyvinylidene fluoride binder, and 2 wt% of a carbon black conductive material in an N-methylpyrrolidone solvent.

**Manufacture of Rechargeable Lithium Battery**

The prepared positive electrode and a lithium metal counter electrode, as a counter electrode, were used to prepare a 2032-type (kind) coin half-cell. A separator (thickness: about 16 $\mu$m) of a porous polyethylene (PE) film was between the positive electrode and the lithium metal counter electrode, and an electrolyte solution was introduced to manufacture a rechargeable lithium battery. The electrolyte solution obtained by mixing $LiPF_6$ of 1.3 M in a mixed solvent containing ethylene carbonate (EC), ethyl methyl carbonate (EMC), and dimethyl carbonate (DMC) in a volume ratio of about 3:4:3 was used as an electrolyte.

**Evaluation Example 1: Surface Analysis of Positive Electrode Active Material**

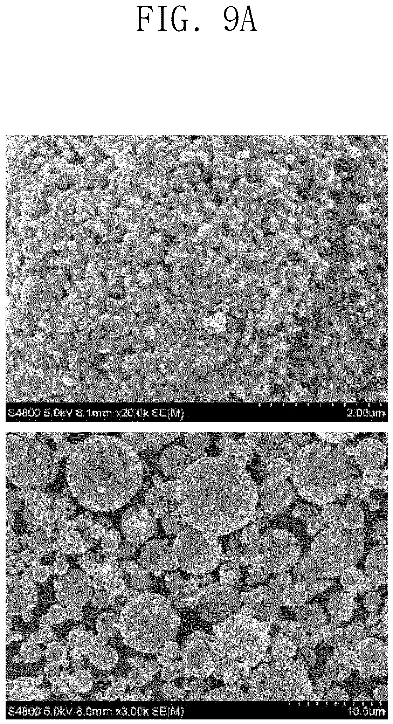

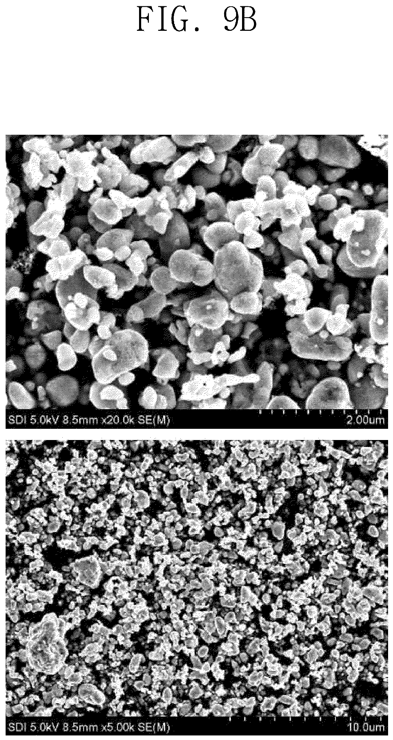

FIG. 9A is scanning electron microscope (SEM) images of the positive electrode active material prepared according to Example 1. FIG. 9B is SEM images of the positive electrode active material prepared according to Example 2. Referring to FIG 9A, it can be seen that the first particle according to one or more embodiments has the form of a sphere-shaped (e.g., substantially sphere-shaped) secondary particle in which a plurality of first primary particles are aggregated (e.g., agglomerated). Referring to FIG. 9B, it can be seen that the second particle according to one or more embodiments has the form of a nano-sized fine single particle.

**Evaluation Example 2: Evaluation on Active Material I**

The pellet densities (PD) and carbon contents (e.g., amounts) of the positive electrode active materials according to Examples 1, 2, and 3-1 to 3-5 were measured, and the results are listed in Table 1. The pellet density was measured by putting 3 grams of a positive electrode active material in a pellet mold and applying a force of about 4.0 US tons for about 30 seconds.

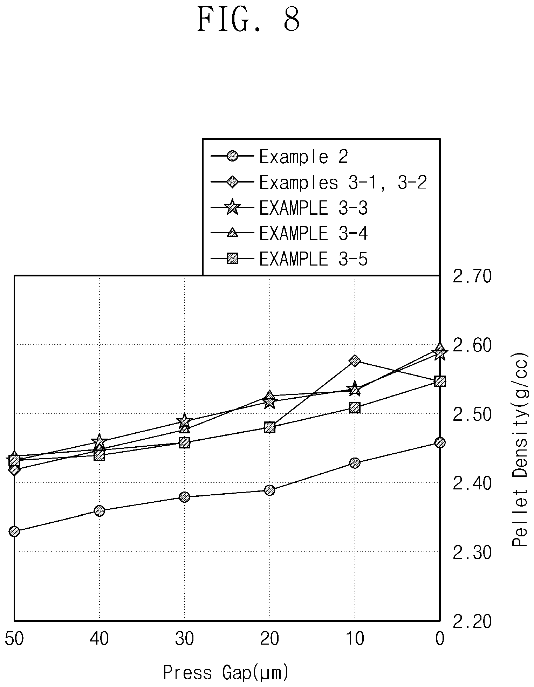

In one or more embodiments, rolling was performed on the positive electrode active materials according to Examples 2, and 3-1 to 3-5 using a pressurizer having a press gap of about 0 $\mu$m to about 50 $\mu$m (e.g., at most about 50 $\mu$m), then the pellet densities (PD) were measured, and the results are shown in FIG. 8. The press gap refers to a distance applied during compression. For example, the press gap of about 10 $\mu$m refers to applying compression until the distance between a plate at the end of the pressurizer and a plate on which the positive electrode active material slurry is placed becomes about 10 $\mu$m.

Table 1

| Classification | Mixing Ratio | | Powder | |
|---|---|---|---|---|
| | Single Particle | Secondary particle | Pellet density (g/cc) | C content (e.g., amount) (wt%) |
| Example 1 | 0% | 100% | 2.45 | 1.84 |
| Example 2 | 100% | 0% | 2.46 | 1.52 |
| Example 3-1 | 10% | 90% | 2.48 | 1.81 |
| Example 3-2 | 20% | 80% | 2.49 | 1.78 |
| Example 3-3 | 30% | 70% | 2.51 | 1.74 |
| Example 3-4 | 40% | 60% | 2.52 | 1.71 |
| Example 3-5 | 50% | 50% | 2.52 | 1.68 |

Referring to Table 1, it can be seen that the positive electrode active materials according to Examples 3-1 to 3-5 have more excellent or suitable pellet densities than the positive electrode active material according to Example 2. In one or more embodiments, it can be seen that the positive electrode active materials according to Examples 3-1 to 3-5 have higher carbon contents (e.g., amounts) than the positive electrode active material according to Example 2.

**Evaluation Example 3: Evaluation on Active Material II**

Table 2 illustrates the weight ratios, of the positive electrode active material, the binder, and the conductive (e.g., electrically conductive) material, used in the preparation of respective positive electrodes including the positive electrode active materials according to Examples 1, 2, and 3-1 to 3-5. At this time, the binder was added in an optimal or suitable amount for each example to ensure sufficient electrode-plate adhesion for smooth preparation of the positive electrode.

Table 2

| Classification | Mixing weight ratio | | Solids weight ratio | | |
|---|---|---|---|---|---|
| | Single particle | Secondar y particle | Positive electrode active material (wt%) | Binder (wt%) | Conductive (e.g., electrically conductive) material (wt%) |
| Example 1 | 0% | 100% | 97 | 1.5 | 1.5 |
| Example 2 | 100% | 0% | 94 | 3 | 3 |
| Example 3-1 | 10% | 90% | 96.8 | 1.6 | 1.6 |
| Example 3-2 | 20% | 80% | 96.6 | 1.7 | 1.7 |
| Example 3-3 | 30% | 70% | 96.4 | 1.8 | 1.8 |
| Example 3-4 | 40% | 60% | 96.2 | 1.9 | 1.9 |
| Example 3-5 | 50% | 50% | 96 | 2 | 2 |

Referring to Table 2, it can be seen that, in the preparation of respective positive electrodes including the positive electrode active materials according to Examples 3-1 to 3-5, a smaller amount of the binder is desired or required than that of Example 2. For example, it can be seen that, because the positive electrode active materials according to Examples 3-1 to 3-5 have higher binding force between the positive electrode active material and the current collector, the positive electrode may be easily prepared even with the small amount of the binder.

**Evaluation Example 4: Evaluation on Slurry**

The viscosities of the positive electrode active material slurries including the positive electrode active materials according to Examples 1, 2, and 3-1 to 3-5 were measured, and the results are listed in Table 3.

Table 3

| | Mixing weight ratio | | Viscosity (mPa·s) |
|---|---|---|---|
| | Single particle | Secondary particle | |
| Example 1 | 0% | 100% | 3000 |
| Example 2 | 100% | 0% | 7500 |
| Example 3-1 | 10% | 90% | 3300 |
| Example 3-2 | 20% | 80% | 4000 |
| Example 3-3 | 30% | 70% | 4300 |
| Example 3-4 | 40% | 60% | 5000 |
| Example 3-5 | 50% | 50% | 5400 |

Referring to Table 3, it can be seen that the viscosity of each of the positive electrode active material slurries according to Examples 3-1 to 3-5 is lower than that of Example 2. For example, it can be seen that, if (e.g., when) preparing the positive electrode active material slurry having a desired or suitable viscosity, a smaller amount of solvent may be included in each of the positive electrode active material slurries according to Examples 3-1 to 3-5, and accordingly, a larger amount of solids may be included therein. Therefore, it can be seen that, if (e.g., when) preparing respective electrodes using the positive electrode active material slurries according to Examples 3-1 to 3-5, it is possible to facilitate applying the slurry to a current collector, and at the same time, to increase or enhance binding force between a positive electrode active material layer and the current collector.

**Evaluation Example 5: Evaluation on Battery Characteristics**

Characteristics of rechargeable lithium batteries prepared using the positive electrode active materials according to Examples 1, 2, and 3-1 to 3-5 were evaluated, and the results are listed in Table 4.
The rechargeable lithium battery was initially charged under conditions of a constant current (0.2 C) and a constant voltage (3.8 V), was rested for about 10 minutes, and then was discharged with a constant current (0.2 C) until a voltage reached 2.5 V. Thereafter, the charging and discharging cycles were repeated 50 times at about 25 °C under about 1.0 C/1.0 C conditions. In addition, a coin cell was additionally manufactured to measure the capacity with about 0.2 C at about -20 °C.

Table 4

| | Mixing weight ratio | | Coin cell | | | | |
|---|---|---|---|---|---|---|---|
| | Single particle | Secondary particle | Charge amount at 3.8 V (mAh/g) | Discharge amount at 3.8 V (mAh/g) | Efficiency at 3.8 V (%) | Capacity at -20 °C (mAh/g) | Lifespan at 3.8 V/50 cycles (%) |
| Example 1 | 0% | 100% | 165.4 | 163.8 | 99.0 | 92 | 100.1 |
| Example 2 | 100% | 0% | 165.2 | 155.8 | 94.3 | 55 | 98.1 |
| Example 3-1 | 10% | 90% | 165.3 | 163.1 | 98.7 | 90 | 99.8 |
| Example 3-2 | 20% | 80% | 165.2 | 162.4 | 98.3 | 88 | 99.8 |
| Example 3-3 | 30% | 70% | 165.4 | 162.1 | 98.0 | 83 | 99.5 |
| Example 3-4 | 40% | 60% | 165.2 | 161.9 | 98.0 | 75 | 99.2 |
| Example 3-5 | 50% | 50% | 165.3 | 160.2 | 96.9 | 65 | 99.1 |

Referring to Table 4, it can be seen that the rechargeable lithium batteries according to Examples 3-1 to 3-5 have higher capacities at about -20 °C than the rechargeable lithium battery according to Example 2. In addition, it can be seen that the rechargeable lithium batteries according to Examples 3-1 to 3-5 have higher lifespans than the rechargeable lithium battery according to Example 2. Furthermore, it can be seen that the rechargeable lithium batteries according to Examples 3-1 to 3-5 exhibit more excellent or suitable charging and discharging efficiency than the rechargeable lithium battery according to Example 2.

A positive electrode active material according to one or more embodiments of the present disclosure may include a first particle which is a secondary particle and a second particle which is a single particle. In one or more embodiments, a positive electrode active material layer may have improved or enhanced electrical conductivity, pellet density, and binding force to a current collector, and an amount of a binder in the positive electrode active material layer may be reduced. A rechargeable lithium battery according to one or more embodiments of the present disclosure may have relatively high capacity (e.g., electrical capacity), long lifespan, and high energy density, and may have improved or enhanced low-temperature characteristics (e.g., electrical characteristics).

In the context of the present application and unless otherwise defined:

Single Particle Form: The second particle PTC2 is described as a single particle, which refers to an individual particle that exists alone without aggregation (or agglomeration). This form has a monolithic structure, indicating that it is a single, unitary structure without grain boundaries. The single particle may be a single crystal or contain a few crystals, and it may exist as an independent phase where particles do not aggregate with each other. In one or more embodiments, the second particle PTC2 may include primary particles that are not aggregated or agglomerated. The average particle diameter of the second particle PTC2 may range from about 100 nm to 2,000 nm (0.1 $\mu$m to 2 $\mu$m). However, the second particle PTC2 may have a random (e.g., amorphous) shape and may not have substantially the same spherical shape as the first particle PTC1, even though the second primary particles are attached.

Secondary Particle Form: The first particle PTC1 is described as a secondary particle, which refers to a particle formed by the aggregation or agglomeration of multiple primary particles. This form has a polycrystal structure, indicating that it is composed of multiple primary particles aggregated together. The secondary particle may have a spherical (e.g., substantially spherical) or oval (e.g., substantially oval) shape and may include a coating layer that enhances structural stability and electrical conductivity. The average particle diameter of the first particle PTC1 may range from about 3 $\mu$m to 10 $\mu$m, with primary particles sized about 50 nm to 200 nm.

In other words, a single particle form refers to an individual, non-aggregated particle that may include primary particles and may have a random (e.g., amorphous) shape, while a secondary particle form may involve multiple primary particles aggregated or agglomerated together.

A battery manufacturing device, a battery management system (BMS) device, and/or any other relevant devices or components according to one or more embodiments of the present disclosure may be implemented utilizing any suitable hardware, firmware (e.g. an application-specific integrated circuit), software, and/or a (e.g., any suitable) combination of software, firmware, and hardware. For example, one or more suitable components of the device may be formed on one integrated circuit (IC) chip or on separate IC chips. Further, one or more suitable components of the device may be implemented on a flexible printed circuit film, a tape carrier package (TCP), a printed circuit board (PCB), and/or formed on one substrate. Further, the one or more suitable components of the device may be a process or thread, running on one or more processors, in one or more computing devices, executing computer program instructions and interacting with other system components to perform the one or more suitable functionalities described herein. The computer program instructions may be stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of one or more suitable computing devices may be combined or integrated into a single computing device, or the functionality of a particular computing device may be distributed across one or more other computing devices without departing from the scope of the present disclosure.

A person of ordinary skill in the art, in view of the present disclosure in its entirety, would appreciate that each suitable feature of the one or more embodiments of the present disclosure may be combined or combined with each other, partially or entirely, and may be technically interlocked and operated in one or more suitable ways, and each embodiment may be implemented independently of each other or in conjunction with each other in any suitable manner unless otherwise stated or implied.

Although one or more embodiments of the present disclosure have been described with reference to the accompanying drawings, it should be understood that the present disclosure should not be limited to these embodiments but one or more suitable changes and modifications can be made within the scope of the appended claims and equivalents thereof, the detailed description of the present disclosure, and the accompanying drawings.

Embodiments are set out in the following clauses:

Clause 1. A preparation method of a positive electrode active material, the method comprising:

preparing a first particle having a first average particle diameter;
preparing a second particle having a second average particle diameter smaller than the first average particle diameter; and
mixing the first particle and the second particle,
wherein the preparing of the first particle comprises
mixing a first iron phosphate precursor, a first lithium source, a first carbon source, and a first dopant source to form a first mixture,
drying the first mixture through spray drying, and
calcining the dried first mixture,
the preparing of the second particle comprises
mixing a second iron phosphate precursor, a second lithium source, a second carbon source, and a second dopant source to form a second mixture,
performing wet grinding on the second mixture,
drying the second mixture, and
calcining the dried second mixture, and
the first particle and the second particle are mixed such that an amount of the first particle is equal to or greater than an amount of the second particle.

Clause 2. The preparation method of clause 1, wherein a mixing weight ratio of the first particle to the second particle is about 50:50 to about 70:30.

Clause 3. The preparation method of clause 1 or clause 2, wherein the first mixture, which is utilized as a spray liquid for the spray drying, has a total solid content of about 20 wt% to about 40 wt% and has a viscosity of about 1500 mPa·s to about 2500 mPa·s.

Clause 4. The preparation method of any one of clauses 1 to 3, wherein the spray drying comprises forming a secondary particle by aggregation of particles in the first mixture.

Clause 5. The preparation method of any one of clauses 1 to 4,

wherein the spray drying is performed at a temperature of about 100 °C to about 300 °C, and
a spray liquid for the spray drying has an input pressure of about 0.3 MPa to about 0.7 MPa and has a flow rate of about 30 mL/min to about 80 mL/min.

**Claims**

1. A positive electrode active material, comprising:

   a first particle containing a compound represented by Formula 1 and having a first average particle diameter; and
   a second particle containing a compound represented by Formula 2 and having a second average particle diameter smaller than the first average particle diameter,
   wherein an amount of the first particle is equal to or greater than an amount of the second particle:

   $$\text{Formula 1} \qquad Li_{a1}Fe_{x1}B1_{y1}PO_{4-b1},$$

   and
   wherein, in Formula 1, $0.8 \leq a1 \leq 1.2$, $0.950 \leq x1 \leq 0.999$, $0.001 \leq y1 \leq 0.05$, $0 \leq b1 \leq 0.05$, and $x1 + y1 = 1$,

   $$\text{Formula 2} \qquad Li_{a2}Fe_{x2}B2_{y2}PO_{4-b2},$$

   and
   wherein, in Formula 2, $0.8 \leq a2 \leq 1.2$, $0.950 \leq x2 \leq 0.999$, $0.001 \leq y2 \leq 0.05$, $0 \leq b2 \leq 0.05$, and $x2 + y2 = 1$, and
   wherein each of B1 in Formula 1 and B2 in Formula 2 is at least one element selected from the group consisting of Ti and Mg.

2. The positive electrode active material as claimed in claim 1,

   wherein the first particle is a sphere-shaped secondary particle, and
   the second particle is a single particle.

3. The positive electrode active material as claimed in claim 1 or claim 2,
   wherein a mixing weight ratio of the first particle to the second particle is about 50:50 to about 70:30.

4. The positive electrode active material as claimed in any one of claims 1 to 3,

   wherein the first particle comprises a plurality of first primary particles aggregated with each other,
   the second particle comprises at least one second primary particle, and
   each of the plurality of first primary particles has a size smaller than a size of the second primary particle.

5. The positive electrode active material as claimed in any one of claims 1 to 4, wherein the first average particle diameter is about 3 $\mu$m to about 10 $\mu$m.

6. The positive electrode active material as claimed in any one of claims 1 to 5, wherein the first particle has a maximum particle diameter ($D_{max}$) of about 10 $\mu$m to about 30 $\mu$m.

7. The positive electrode active material as claimed in any one of claims 1 to 6, wherein the second average particle diameter is about 0.1 $\mu$m to about 2 $\mu$m.

8. The positive electrode active material as claimed in any one of claims 1 to 7,

   wherein the first particle comprises a plurality of first primary particles aggregated with each other, and
   the plurality of first primary particles have an average particle diameter of about 50 nm to about 200 nm.

9. The positive electrode active material as claimed in any one of claims 1 to 8,

   wherein the first particle comprises a first coating layer containing carbon, and
   an amount of the carbon in the first particle is about 1.5 wt% to about 2.5 wt%.

10. The positive electrode active material as claimed in claim 9,

    wherein the second particle comprises a second coating layer containing carbon, and
    the amount of the carbon in the first particle is greater than an amount of the carbon in the second particle.

11. The positive electrode active material as claimed in any one of claims 1 to 10,

    wherein B is Ti and Mg in the first particle,
    in the first particle, an atomic fraction of Ti is greater than an atomic fraction of Mg, and
    the first particle satisfies Expression 1:

    Expression 1

    $$3.0 < \frac{2 \times (\text{oxidation number of Mg}) + 4 \times (\text{oxidation number of Ti})}{(\text{oxidation number of Mg}) + (\text{oxidation number of Ti})} < 3.5.$$

12. The positive electrode active material as claimed in any one of claims 1 to 11, wherein a span value, obtained by analysis on the first particle utilizing a particle size analyzer, is about 0.3 to about 0.75.

13. The positive electrode active material as claimed in any one of claims 1 to 12, wherein the first particle has a porosity of about 20% to about 40%.

14. The positive electrode active material as claimed in any one of claims 1 to 13, wherein a pellet density of the positive electrode active material is about 2.0 g/cc to about 3.0 g/cc.

15. A rechargeable lithium battery, comprising the positive electrode active material as claimed in any one of claims 1 to 14.

# FIG. 1

ELL

Li$^+$

COL1 AML1          30          COL2 AML2

10                                    20

# FIG. 2

FIG. 3

EP 4 651 232 A1

# FIG. 4

# FIG. 5

FIG. 6

# FIG. 7

```
┌─────────┐
│  Start  │
└─────────┘
     │
     ▼
┌──────────────────────────────────┐
│  Mix precursor, lithium source,  │ ─── S100
│  carbon source, and dopant source│
└──────────────────────────────────┘
     │
     ▼
┌──────────────────────────────────┐
│             Wet grind            │ ─── S200
└──────────────────────────────────┘
     │
     ▼
┌──────────────────────────────────┐
│               Dry                │ ─── S300
└──────────────────────────────────┘
     │
     ▼
┌──────────────────────────────────┐
│             Calcine              │ ─── S400
└──────────────────────────────────┘
     │
     ▼
┌──────────────────────────────────┐
│             Dry grind            │ ─── S500
└──────────────────────────────────┘
     │
     ▼
┌─────────┐
│   End   │
└─────────┘
```

# FIG. 8

# FIG. 9A

# FIG. 9B

# EP 4 651 232 A1

## EUROPEAN SEARCH REPORT

**Application Number**

EP 25 16 8823

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/155623 A1 (CONTEMPORARY AMPEREX TECHNOLOGY CO LTD [CN]) 24 August 2023 (2023-08-24) * see citations of the family member below * & US 2025/015386 A1 (HUANG XIAOTENG [CN] ET AL) 9 January 2025 (2025-01-09) * page 85, paragraph 1359 - page 138, paragraph 1692; figures 152-166; tables 19, 27, 33, 36, 42-45 * | 1-15 | INV. H01M4/36 H01M4/525 H01M4/58 H01M4/62 H01M10/0525 ADD. H01M4/02 |
| X | KR 2015 0024704 A (LG CHEMICAL LTD [KR]) 9 March 2015 (2015-03-09) * page 4, paragraph 0020 - page 18, paragraph 0137; claims 1-16; figures 1, 2; table 1 * | 1-15 | |
| T | "A Basic Guide to Particle Characterization", Malvern Instruments Worldwide - White Paper, 2 May 2012 (2012-05-02), pages 1-26, XP055089322, Retrieved from the Internet: URL:http://golik.co.il/Data/ABasicGuidtoPa rticleCharacterization(2)_1962085150.pdf [retrieved on 2020-05-15] * the whole document * | 1,4-8 | |

**TECHNICAL FIELDS SEARCHED (IPC)**

H01M

The present search report has been drawn up for all claims

| Place of search | Date of completion of the search | Examiner |
|---|---|---|
| Munich | 5 October 2025 | Polisski, Sergej |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

31

## ANNEX TO THE EUROPEAN SEARCH REPORT
## ON EUROPEAN PATENT APPLICATION NO.

EP 25 16 8823

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2025

| Patent document cited in search report | Publication date | Patent family member(s) | | Publication date |
|---|---|---|---|---|
| WO 2023155623 A1 | 24-08-2023 | CN | 116724443 A | 08-09-2023 |
| | | CN | 116745978 A | 12-09-2023 |
| | | CN | 116802897 A | 22-09-2023 |
| | | CN | 118970265 A | 15-11-2024 |
| | | CN | 118970266 A | 15-11-2024 |
| | | CN | 118970267 A | 15-11-2024 |
| | | CN | 119009246 A | 22-11-2024 |
| | | CN | 119050529 A | 29-11-2024 |
| | | CN | 119133680 A | 13-12-2024 |
| | | CN | 219203335 U | 16-06-2023 |
| | | CN | 219203336 U | 16-06-2023 |
| | | CN | 219575742 U | 22-08-2023 |
| | | CN | 220042013 U | 17-11-2023 |
| | | EP | 4451443 A1 | 23-10-2024 |
| | | EP | 4459748 A1 | 06-11-2024 |
| | | EP | 4481897 A1 | 25-12-2024 |
| | | JP | 2024544664 A | 03-12-2024 |
| | | JP | 2025501376 A | 17-01-2025 |
| | | JP | 2025503719 A | 04-02-2025 |
| | | KR | 20240091290 A | 21-06-2024 |
| | | KR | 20240117128 A | 31-07-2024 |
| | | KR | 20240118156 A | 02-08-2024 |
| | | US | 2024405321 A1 | 05-12-2024 |
| | | US | 2024421376 A1 | 19-12-2024 |
| | | US | 2025015386 A1 | 09-01-2025 |
| | | WO | 2023155622 A1 | 24-08-2023 |
| | | WO | 2023155623 A1 | 24-08-2023 |
| | | WO | 2023155624 A1 | 24-08-2023 |
| | | WO | 2023155625 A1 | 24-08-2023 |
| KR 20150024704 A | 09-03-2015 | NONE | | |

For more details about this annex : see Official Journal of the European Patent Office, No. 12/82

EPO FORM P0459